**Europäisches Patentamt**

**European Patent Office**

**Office européen des brevets**

(19)

(11) Publication number : **0 551 359 B1**

(12) # EUROPEAN PATENT SPECIFICATION

(45) Date of publication of patent specification :
10.08.94 Bulletin 94/32

(51) Int. Cl.$^5$ : **A01N 1/02**

(21) Application number : **91917590.1**

(22) Date of filing : **27.09.91**

(86) International application number :
**PCT/EP91/01885**

(87) International publication number :
**WO 92/05693 16.04.92 Gazette 92/09**

(54) **CHEMICAL COMPOSITIONS.**

(30) Priority : **01.10.90 GB 9021325**

(43) Date of publication of application :
**21.07.93 Bulletin 93/29**

(45) Publication of the grant of the patent :
**10.08.94 Bulletin 94/32**

(84) Designated Contracting States :
**DE FR GB IT**

(56) References cited :
**WO-A-87/01940**
**WO-A-91/11101**
**AU-B- 559 805**
**DE-A- 2 908 436**
**DE-A- 3 007 913**
**DE-A- 3 030 863**
**GB-A- 2 213 362**

(73) Proprietor : **ED. GEISTLICH SÖHNE AG FÜR CHEMISCHE INDUSTRIE**
**CH-6110 Wolhusen Lucerne (CH)**

(72) Inventor : **PFIRRMANN, Rolf, Wilhelm**
**Schadrudistrasse 27**
**CH-6006 Lucerne (CH)**

(74) Representative : **Holmes, Michael John et al**
**Frank B. Dehn & Co.**
**Imperial House**
**15-19 Kingsway**
**London WC2B 6UZ (GB)**

EP 0 551 359 B1

## Description

This invention relates to compositions for the preservation of organs for transplant.

The <u>ex vivo</u> storage of organs for transplant is a relatively new development. In the case of kidneys, the two most commonly used methods are hypothermic storage and continuous perfusion. In the case of hyperthermic storage, the organs are removed from the body, cooled rapidly, immersed in a flush-out solution and kept at a temperature of 0 to 4°C. In the case of continuous perfusion, a pulsed flow of a suitable oxygenated perfusate is passed through the organ at hypothermic temperatures. These techniques have enabled certain organs to be stored for as long as seven days before transplant.

In general, flush-out and perfusate solutions have contained a colloidal material to bind water and thus reduce oedema. Originally, human serum albumin was used but subsequently a number of synthetic colloidal materials were tried in an attempt to produce a more standard product. However, few of these were effective. In the late 1960's it was demonstrated that Collins solution or the modified EuroCollins solution, were capable of preserving kidneys for as long as 72 hours by continuous perfusion. However, attempts to extend this work to other organs was less successful.

GB 2213362A discloses perfusion solutions containing a lactobionate and hydroxyethyl starch (HES) having a molecular weight from 150,000 to 350,000 daltons, the HES being substantially free from ethylene glycol, ethylene chlorhydrin, sodium chloride and acetone. These are claimed to extend clinical organ preservation time. However, such solutions have commonly been found to produce an "itching" reaction which limits their use. It has been found that this reaction is associated with the high molecular weight of the HES and that lower molecular weight HES is substantially free from such an effect.

According to the present invention we provide the use of an aqueous solution of physiologically inert hydroxyethyl starch for the preservation and storage of an organ intended for transplantation characterised in that said hydroxyethyl starch has a mean molecular weight less than 100,000 daltons.

By the term 'physiologically inert' we mean that the HES material does not exert any significant undesired physiological effects and this requires, primarily, that it is substantially free from contaminants such as ethylene oxide or chlorhydrin or solvents such as acetone.

In general it is preferred that the mean molecular weight of the HES is in the range 30-70,000 daltons, advantageously about 65,000 daltons; it is preferably free from HES having a molecular weight above 100,000 daltons. The degree of substitution of the HES is preferably in the range 0.4 to 0.7. HES 40 (0.5), having a mean molecular weight of about 65,000 and a degree of substitution of 0.5 is particularly preferred. At a concentration of 6% by weiht this gives a colloid osmotic pressure of about 400 mm water.

In general the concentration of the HES will be in the range 3 to 8% by weight.

Prior perfusion solutions have normally contained an antibiotic such as penicillin. Thus International Patent Application WO 87/01940 describes a preferred form of the perfusion solution disclosed in UK 2213362 containing penicillin, presumably to combat infection by microorganisms and also glutathione which acts as an antioxidant serving to remove oxygen free radicals. We have found that the antibacterial compounds taurultam and taurolidine are more effective than penicillin in combating not only infecting bacteria but also the toxins they produce and furthermore exert an antioxidant effect against oxygen free radicals. However, glutathione may also usefully be included in the compositions, e.g. in the concentration range 0.05 to 2.0% w/w.

A preferred form of the compositions of the invention thus contains taurolidine or, more preferably, taurultam and is advantageously free from antibiotics such as penicillin. The concentration of taurultam (or taurolidine) may thus advantageously be in the range 0.5 to 4% w/w e.g. about 1.0 to 2.0% w/w.

A particular advantage of the use of taurultam or taurolidine as an antibacterial instead of penicillin is that the former compounds withstand sterilisation by autoclaving whereas penicillin does not. However some components of the composition such as phosphate buffer may not be autoclavable in which case they may be sterilised by other means and introduced into the compositions by admixture immediately prior to use.

The flush out solution should desirably contain certain components which minimise hypothermic-induced cell swelling due to the accumulation of water. This can be achieved by adding one or more substances which are impermeable to the cell, so-called impermeants. The nature of such impermeants may be organ-specific and thus the glucose included in Collins cold-storage solution, as used for kidneys, is not effective in the liver or pancreas, where it readily enters the cells. A preferred type of impermeant which may be used more generally is a salt of lactobionic acid. Raffinose may also be used as an impermeant. However, if not used in large quantities, glucose may be satisfactory. The impermeants, such as lactobionate and raffinose, may total, for example , 3 to 8% w/w of the composition.

In general, the composition preferably has an osmolality greater than 250 mOsm/litre, more preferably in the range 250-350 mOsm/litre, e.g. about 300 mOsm/litre.

In order to prevent or limit intracellular acidosis, caused, for example, by glycolysis and glycogenolysis

EP 0 551 359 B1

leading to production of lactic acid, the composition of the invention is preferably buffered, advantageously in the range 7.0 to 7.6, e.g. about 7.4, for example using phosphate buffer.

Energy metabolism is important and adenosine triphosphate (ATP) rapidly degrades during hypothermic storage whereas organ perfusion necessitates rapid regeneration of Na- pump activity which requires ATP. It is advantageous, therefore to include ATP or a precursor thereof such as adenosine in the compositions of the invention e.g. at a concentration in the range 0.05 to 0.3%, for example about 0.15% w/w.

It is important that the perfusion or flush-out solution contains an electrolyte in order to provide approximately isotonic osmolality. However, anions such as chloride can increase hypothermic induced cell swelling and it is advantageous to use larger cations such as gluconate.

In addition to the foregoing, the compositions of the invention can advantageously contain one or more of allopurinol, insulin and an antiinflammatory such as dexamethasone.

Tests on dissected and ischaemic livers of male Wistar rats by infusion via the portal vein of solutions according to the invention containing 0.5 and 1.0% w/w of taurultam showed the marked influence of the higher concentration of taurultam on inhibition of a rapid increase in alanine aminotransferase, aspartate aminotransferase and glutamate dehydrogenase, demonstrating greater inhibition of tissue degradation.

Tests on pigs, the physiology of which has particularly close parallels to human physiology, have shown that in the case of lung transplants, use of solutions containing HES in the molecular weight range 150,000-350,000, substantially as in GB 2213362A, led to swelling of the alveolar membrane (oedema) and the subject pigs all died after about 1 day whereas using a solution according to the invention, all the pigs survived.

According to a further feature of the present invention we provide a method of storage of organs for transplant whereby the organ is perfused substantially immediately after dissection with a solution according to the invention at a hypothermic tissue storage temperature and maintained at such temperature during the storage period.

It is advantageous to cool the organ rapidly, immediately after dissection from the body by so-called core cooling, that is flush-out with a cold isotonic buffer solution to bring the temperature rapidly down to the required hypothermic level, i.e. 0°-4°C.

It should be noted that, in the case of cadavers, the cold flush-out solution can be applied to the whole body or to a group of organs such as heart, liver, pancreas and kidneys, which may be removed individually or as a group.

The stored organs are advantageously flushed out with preservation solution (and then with fresh blood) immediately before the transplant operation.

The following Example is given by way of illustration only:-

Example 1

| Solution A | g/900ml |
|---|---|
| Lactobionic acid | 35.830 |
| Adenosine | 1.340 |
| Raffinose Pentahydrate | 17.830 |
| HES 40 (0.5) | 50.000 |
| Glutathione | 0.929 |
| Allopurinol | 0.136 |
| Taurultam | 10.000 |
| KCl | 5.200 |
| $MgSO_4$ 7 $H_2O$ | 1.230 |
| NaOH 25% w/v to give pH 7.5 | |
| Distilled Water | ad. 900 |

The above components are dissolved in the distilled water, filled into vials and autoclaved for 15 minutes at 120°C.

3

```
Solution B                                    g/100ml


NaH₂PO₄  .  2 H₂O                              4.6830
Sodium hydroxide 100% aq. to give             pH 7.50
Distilled Water                    ad.        100
```

The above components are sterile filled into vials. For use, 900 ml of Solution A and 100 ml of Solution B are admixed.


**Claims**

1. The use of an aqueous solution of physiologically inert hydroxyethyl starch for the preservation and storage of an organ intended for transplantation characterised in that said hydroxyethyl starch has a mean molecular weight less than 100,000 daltons.

2. Use as claimed in claim 1 in which the molecular weight of said hydroxyethyl starch is in the range 30,000 to 70,000.

3. Use as claimed in claim 1 or claim 2 in which the degree of substitution of the hydroxyethyl starch is in the range 0.4 to 0.7.

4. Use as claimed in any of the preceding claims in which the concentration of said hydroxyethyl starch is in the range 3 to 8% by weight.

5. Use as claimed in any of the preceding claims in which said aqueous solution contains a bacterially effective concentration of taurultam and/or taurolidine.

6. Use as claimed in any of claims 1-5 in which said aqueous solution is free from penicillin or other antibiotics.

7. Use as claimed in any of the preceding claims in which said aqueous solution contains glutathione, raffinose, a lactobionate, adenosine triphosphate and/or allopurinol.

8. Use as claimed in any of the preceding claims in which the osmolality of said aqueous solution is in the range 250-350 mOsm/litre.

9. A method of storage of organs for transplant whereby the organ is perfused substantially immediately after dissection with a solution as defined in claim 1 at a tissue storage temperature and maintained at such temperature during the storage period.

10. A composition for the preservation and storage of an organ for transplantation comprising an aqueous solution of physiologically inert hydroxyethyl starch characterised in that said hydroxyethyl starch has a mean molecular weight less than 100,000 daltons and that said composition contains one or more components selected from taurolidine, taurultam, impermeants, adenosine, ATP, allopurinol, insulin, anti-inflammatories, antioxidants and buffers.

11. A two-part composition for the preservation and storage of an organ for transplantation comprising (A) a sterilised aqueous solution of physiologically inert hydroxyethyl starch characterised in that said hydroxyethyl starch has a mean molecular weight less than 100,000 daltons and that said composition contains one or more components selected from taurolidine, taurultam, impermeants, adenosine, ATP, allopurinol, insulin, anti-inflammatories and antioxidants, together with (B) a sterile buffer solution.

## Patentansprüche

1. Verwendung einer wäßrigen Lösung von physiologisch inerter Hydroxyethylstärke zur Konservierung und Lagerung eines zur Transplantation vorgesehenen Organs, dadurch gekennzeichnet, daß diese Hydroxyethylstärke ein mittleres Molekulargewicht von weniger als 100 000 Dalton hat.

2. Verwendung, wie in Anspruch 1 beansprucht, wobei das Molekulargewicht der Hydroxyethylstärke im Bereich von 30 000 bis 70 000 liegt.

3. Verwendung, wie in Anspruch 1 oder Anspruch 2 beansprucht, worin der Grad der Substitution der Hydroxyethylstärke im Bereich von 0,4 bis 0,7 liegt.

4. Verwendung, wie in einem der vorhergehenden Ansprüche beansprucht, wobei die Konzentration der genannten Hydroxyethylstärke im Bereich von 3 bis 8 Gew.-% liegt.

5. Verwendung, wie in einem der vorhergehenden Ansprüche beansprucht, wobei die genannte wäßrige Lösung eine bakteriell wirksame Konzentration von Taurultam und/oder Taurolidin enthält.

6. Verwendung, wie in einem der Ansprüche 1 bis 5 beansprucht, wobei die wäßrige Lösung frei von Penicillin oder anderen Antibiotika ist.

7. Verwendung, wie in einem der vorhergehenden Ansprüche beansprucht, wobei die genannte wäßrige Lösung Glutathion, Raffinose, ein Lactobionat, Adenosintriphosphat und/oder Allopurinol enthält.

8. Verwendung, wie in einem der vorhergehenden Ansprüche beansprucht, wobei die Osmolalität der genannten wäßrigen Lösung in dem Bereich von 250 bis 350 mOsm/l liegt.

9. Verfahren zur Lagerung von Organen zum Transplantieren, wobei das Organ im wesentlichen sofort unmittelbar nach der Sektion mit einer Lösung, wie in Anspruch 1 definiert, bei einer Gewebelagerungstemperatur perfundiert wird und bei einer solchen Temperatur während der Lagerungsdauer gehalten wird.

10. Zusammensetzung zur Konservierung und Lagerung eines Organs zur Transplantation, umfassend eine wäßrige Lösung von physiologisch inerter Hydroxyethylstärke, dadurch gekennzeichnet, daß diese Hydroxyethylstärke ein mittleres Molekulargewicht von weniger als 100 000 Dalton hat, und daß diese Zusammensetzung eine oder mehr Komponenten, ausgewählt aus Taurolidin, Taurultam, undurchlässigen Stoffen, Adenosin, ATP, Allopurinol, Insulin, antiinflammatorischen Stoffen, Antioxidantien und Puffern, enthält.

11. Zweiteilige Zusammensetzung zur Konservierung und Lagerung eines Organs zur Transplantation, umfassend (A) eine sterilisierte wäßrige Lösung von physiologisch inerter Hydroxyethylstärke, dadurch gekennzeichnet, daß diese Hydroxyethylstärke ein mittleres Molekulargewicht von weniger als 100 000 Dalton hat, und daß diese Zusammensetzung eine oder mehr Komponenten, ausgewählt aus Taurolidin, Taurultam, undurchlässigen Stoffen, Adenosin, ATP, Allopurinol, Insulin, antiinflammtorischen Stoffen und Antioxidantien, enthält, zusammen mit (B) einer sterilen Pufferlösung.

## Revendications

1. Utilisation d'une solution aqueuse d'amidon hydroxyéthylé physiologiquement inerte pour la conservation et le stockage d'organes destinés à la transplantation, caractérisée en ce que ledit amidon hydroxyéthylé a un poids moléculaire moyen de 100 000 daltons.

2. Utilisation selon la revendication 1, selon laquelle le poids moléculaire dudit amidon hydroxyéthylé est compris entre 30 000 et 70 000.

3. Utilisation selon la revendication 1 ou 2, selon laquelle le degré de substitution dudit amidon hydroxyéthylé est compris entre 0,4 et 0,7.

4. Utilisation selon l'une quelconque des revendications précédentes, selon laquelle la concentration dudit amidon hydroxyéthylé est comprise entre 3 et 8% en poids.

5. Utilisation selon l'une quelconque des revendications précédentes, selon laquelle ladite solution aqueuse contient une concentration efficace du point de vue bactérien de taurultam et/ou de taurolidine.

6. Utilisation selon l'une quelconque des revendications 1 à 5, selon laquelle ladite solution aqueuse est exempte de pénicilline ou autres antibiotiques.

7. Utilisation selon l'une quelconque des revendications précédentes, selon laquelle ladite solution aqueuse contient de la glutathione, du raffinose, un lactobionate, de l'adénosine triphosphate et/ou de l'allopurinol.

8. Utilisation selon l'une quelconque des revendications précédentes, selon laquelle l'osmolalité de ladite solution aqueuse est comprise entre 250 et 350 mOsm/litre.

9. Méthode de stockage d'organes destinés à la transplantation, dans lequel l'organe est mis sous perfusion presque immédiatement après la dissection à l'aide d'une solution telle que définie à la revendication 1, à une température de stockage du tissu et maintenue à ladite température pendant la durée du stockage.

10. Composition pour la conservation et le stockage d'un organe destiné à la transplantation comprenant une solution aqueuse d'un amidon hydroxyéthylé physiologiquement inerte, caractérisée en ce que ledit amidon hydroxyéthylé a un poids moléculaire moyen inférieur à 100 000 daltons et en ce que ladite composition contient un ou plusieurs constituants choisis parmi la taurolidine, le taurultam, des imperméants, l'adénosine, l'ATP, l'allopurinol, l'insuline, des anti-inflammatoires, des antioxydants et des tampons.

11. Composition en deux parties pour la conservation et le stockage d'un organe destiné à la transplantation comprenant (A) une solution aqueuse stérilisée d'un amidon hydroxyéthylé physiologiquement inerte, caractérisée en ce que ledit amidon hydroxyéthylé a un poids moléculaire moyen inférieur à 100 000 daltons et en ce que ladite composition contient un ou plusieurs constituants choisis parmi la taurolidine, le taurultam, des imperméants, l'adénosine, l'ATP, l'allopurinol, l'insuline, des anti-inflammatoires et des antioxydants, associée à (B) une solution de tampon stérile.